# EUROPEAN PATENT APPLICATION

(11) **EP 4 310 222 A1**
(43) Date of publication of application: **24.01.2024**
(21) Application number: 22306076.5
(22) Date of filing: 20.07.2022
(51) Int. Cl.: C23C 24/04, C23C 24/08, C23C 28/02, C23C 30/00, B64C 11/00, F04D 29/00

(54) **COLD SPRAY PROCESS**

(71) Applicant: Hamilton Sundstrand Corporation, Charlotte, NC 28217 (US)
(72) Inventor: BARTH, Robert A., South Windsor, CT 06074 (US); SIOPIS, Matthew J., West Hartford, CT 06107 (US); MANES, Enrico, Feeding Hills, MA 01030 (US)
(74) Representative: Dehns

(57) **Abstract**

A method of applying or building a metal layer onto a substrate using cold spray to accelerate the metal powder to high velocities where on impact with the substrate the powder undergoes large plastic deformations to form a metallurgical bond. This method comprises cold spraying a metal powder onto a mesh which is integrated in or applied to a substrate.

## Description

### TECHNICAL FIELD

The present disclosure relates to a cold spray process for forming a component by additive building or applying a coating to a substrate by cold spraying.

### BACKGROUND

Various applications require a coating such as a metal layer to be applied to a substrate. For example, in engines or for aircraft parts, it is often desirable for reasons of cost, ease of manufacture, low weight and other reasons to make many parts of a non-metal material. Because of the environments in which these parts are used, however, a metal layer often needs to be provided to a part to provide corrosion resistant properties or to protect against lightning strikes, or to provide a surface that is stronger or more robust against harsh environments or extreme temperatures, or less subject to impact from flying or air-borne articles, stones, hailstones, birds etc.

Traditionally, such layers have been applied to the substrates or surfaces by mechanical fastening or by adhesive bonding or the like. In more recent times, particularly with advances in additive manufacturing techniques, thermal spray technologies have become a preferred way to apply such layers to combine the advantages of a lighter, easily processed material with a stronger, robust metal coating. Cold spray processes involve spraying metal such as titanium, titanium alloys, aluminium etc. in powder form onto the substrate using a high pressure, high temperature gas spray such as nitrogen or helium. The powder is deposited onto the substrate at supersonic speeds such that it forms a solid-state metallurgical bond with the substrate.

Although cold spray techniques have been found to be effective and efficient, some surface types that require a metal coating are not suitable for cold spraying and will either be damaged by the cold spray process or do not have the properties to allow the sprayed material to adhere to them or to fully and reliably bond. This problem occurs, for example when a metal is to be deposited onto a non-metal composite surface. Many engine and aircraft parts are now made of composite materials e.g. fan blades. These composite materials, being relatively soft, may erode or, especially if they are thin, may be distorted due to residual stresses that form at the surface due to the cold spray process. In particular, cold spraying onto epoxy substrates has proved to be challenging.

Particularly since there are many advantages to using composite materials e.g. in aircraft and in other engine applications, due, e.g. to their light weight and improved processing properties, it would be desirable to have a cold spray process that is suitable for applying a metal layer onto such materials without the above-mentioned problems or to be able to use a cold spray process to build a part or component.

### SUMMARY

According to the present disclosure, there is provided a method of forming a metal layer using cold spraying of a metal powder in a high velocity gas jet, the method comprising spraying the powder onto a mesh.

The method can be used to apply a coating to a substrate by spraying the metal powder onto the mesh which is applied to the substrate. The mesh may be provided on the substrate and then sprayed or, alternatively a layer or part can be formed on the mesh and then applied to the substrate.

The method may also be used to build a part or component by spraying onto the mesh which may be mounted on a mandrel.

The metal layer may include non-metallic components to provide desired properties.

### BRIEF DESCRIPTION

Examples of the cold spray process according to this disclosure will now be described, but it should be noted that these are examples only and variations may be possible within the scope of the claims.

### DETAILED DESCRIPTION

The present disclosure relates to a cold spray process. As mentioned above, cold spray techniques are already known and these will not be described in any further detail. The materials used in the cold spray, the apparatus used, and the conditions (temperature, pressure, spray speed, compositions etc.) can be the same as any known cold spray processes and the material that is sprayed on the substrate will be selected according to the application. The present disclosure is not limited to any particular substances, materials, conditions or equipment for forming the jet of powder being sprayed.

According to the disclosure, the powder spray is sprayed onto a lattice or mesh, preferably a compliant mesh that can be bent or shaped to fit the substrate onto which the layer is to be provided, the mesh having properties that allow the sprayed metal to be deposited onto it and to bond thereto without damage or distortion.

The mesh may be sprayed and thus formed with a metal layer and then subsequently attached to the substrate to be coated, e.g. by mechanical attachment. A compliant mesh with the sprayed coating can be bent or formed to the shape of the substrate. A compliant mesh is able to cover or form complex shapes, thus increasing applicability of the process to a wide range of applications.

Alternatively, the mesh may be applied to or placed on the substrate and then sprayed, the sprayed powder bonding to the mesh in situ.

Alternatively, a mesh could be incorporated into a final layer of a composite material as the composite is being formed, e.g. by heat curing or by use of an adhesive or resin such as a polymer resin or a thermoplastic, such that the mesh is integrated onto the surface of the composite surface while the surface is being formed.

In another example, a base layer, which could be a so-called bond coat or sacrificial layer that adheres well to the mesh could be first sprayed onto the mesh and then one or more top layers of the type of material that has the desired properties for the coating or component could be sprayed onto this base layer. This is a useful alternative where the composition having the desired properties is not one that would easily bond or adhere to the mesh.

In another example, the mesh may be fully or partially ferro-magnetic e.g. by incorporating ferro-magnetic filaments in the mesh, and can be fixed to a surface or to a mandrel by magnetic force.

By cold spraying onto an intermediate mesh, it is possible to use effective and convenient cold spray processes even for substrates or surfaces that have not typically been suitable for using cold spray technique to apply metal layers. The process can be implemented in situ (e.g. 'on-wing' for aircraft) for repair purposes. A compliant mesh will enable coatings to be applied, using cold spray techniques, even to complex surfaces such as leading edges of propeller blades etc. The mesh can be applied to the substrate or can be sprayed while on a mandrel to form a standalone part that can be used when and where appropriate. The cold-sprayed mesh can be formed to e.g. repair holes or cracks in parts or surfaces e.g. to repair a hole in an aircraft engine nacelle.

Different types of mesh and different mesh materials and different degrees or fine- or coarse- ness may be used. The spacing of the mesh must be fine enough to hold the powder of the cold spray (typically particle sizes of 10 - 100 microns) but not so fine that it cannot be held onto the substrate. Meshes of steel, aluminium, copper, nickel, moly tungsten and the like have been found to be particularly useful. Ceramics or other filaments may also be incorporated into the mesh. The mesh may be made up of different fiber types, diameters etc. according to the desired properties.

In an example used for a blade leading edge, the cold spray material was Valimet HP material. Meshes of 304 Stainless steel and of aluminium were used with varying mesh sizes to determine the optimal mesh for that particular application. In experiments, the inventors tried mesh sizes of 200 x 200 filaments per inch; 50 x 50 filaments per inch; 200 x 600 filaments per inch and 400 x 400 filaments per inch. As an example, an aluminium deposit layer of 0.044" thick was formed on a stainless steel mesh of 0.001" thickness. The fine mesh was compliant and even when coated could be formed into complex shapes. This is, of course, just one example, for the purposes of illustration.

In an example, the mesh may be formed, or may include ceramic fibers. Ceramic fibers can improve erosion resistance, but can also improve temperature resistance, add strength and can create a compressive strain when heated.

It may, in some situations, be preferable to use a copper mesh. A copper mesh is often provided to aircraft parts to protect against lightning strikes and this copper mesh could also be used for the cold spray process.

The use of a mesh allows additional functions to be incorporated into the coating. For example, sensors such as temperature, pressure, light or proximity sensors could be incorporated into the mesh and/or thermal wires can be included in the mesh to respond to temperature changes and/or to provide heating. Such features may be useful in e.g. providing a de-icing function. Health monitoring features/sensors may also be incorporated into the mesh.

Depending on the application, several layers of mesh may be used. In an example, one or more layers may be cold sprayed, and the additional layers may be subsequently provided over the initial sprayed layer(s) and sprayed, with the same or a different powder, to build up a required cold-sprayed coating or product of desired composition, thickness and/or strength.

The invention allows the flexibility of forming different coating alloys or compositions by using different layers of mesh (of the same or different material and/or mesh dimensions) and/or different spray powders. One possibility is to use materials/substances that have low observability to radars and the like. Other properties e.g. fluorescence, magnetism etc. can also be incorporated by the selection of appropriate materials. Materials can be selected to enable health monitoring.

Cold spraying allows layers to be built up on a substrate, easily and at high speeds, e.g. by cold spraying different materials forming different layers on a substrate to provide different surface properties. Different meshes can also be used, making the process of this disclosure extremely flexible in its use and applicability. The invention allows for great flexibility and versatility in providing cold-spray coatings or components. Whilst particularly useful in applying metal to composite materials, the process also has advantages in applying metal to other metal surfaces or to surfaces of other materials.

## Claims

1. A method of forming a metal layer using cold spraying of a metal powder in a high velocity gas jet, the method comprising spraying the powder onto a mesh.

2. The method of claim 1, wherein the mesh is a compliant mesh.

3. The method of claim 1 or 2, comprising forming the mesh onto a mandrel and spraying the powder onto the mesh on the mandrel.

4. The method of claim 1 or 2, comprising providing the mesh on a substrate before spraying the powder onto the mesh.

5. The method of claim 1 or 2, comprising spraying the powder onto the mesh and then applying the mesh onto a substrate.

6. The method of any preceding claim, wherein the mesh is formed of multiple mesh layers.

7. The method of any preceding claim, wherein the mesh is at least partially ferro-magnetic.

8. The method of claim 7, wherein the mesh is formed with alternating magnetic layers to create magnetic forces.

9. The method of claim 6, wherein the mesh is secured to a magnetic substrate or mandrel.

10. The method of any preceding claim, wherein the mesh includes aluminium, and/or stainless steel and/or copper and/or ceramic .

11. The method of any of claims 1 to 9, wherein the metal includes aluminium and/or titanium.

12. The method of claim 4 or 5 or any claim dependent thereon, wherein the substrate is a composite material.

13. The method of claim 4 or 5 or any claim dependent thereon, wherein the substrate is an epoxy material.

14. The method of claim 4 or 5 or any claim dependent thereon, wherein the substrate is a fan blade.

15. The method of any preceding claim, wherein the mesh incorporates one or more sensors and/or one or more heating wires.
